(19) **Europäisches Patentamt / European Patent Office / Office européen des brevets**

(11) **EP 2 304 413 B1**

(12) **FASCICULE DE BREVET EUROPEEN**

(45) Date de publication et mention
de la délivrance du brevet:
**04.03.2015 Bulletin 2015/10**

(21) Numéro de dépôt: **09780337.3**

(22) Date de dépôt: **08.07.2009**

(51) Int Cl.:
**G01N 23/205** (2006.01)    **G01N 23/207** (2006.01)

(86) Numéro de dépôt international:
**PCT/EP2009/058698**

(87) Numéro de publication internationale:
**WO 2010/009982 (28.01.2010 Gazette 2010/04)**

(54) **Procédé d'obtention du facteur de structure d'un matériau amorphe, notamment d'un verre amorphe**

Verfahren zur Bestimmung des Strukturfaktors eines amorphen Materials, insbesondere eines amorphen Glases

Method of obtaining a structure factor of an amorphous material, in particular of amorphous glass

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **22.07.2008 FR 0804168**

(43) Date de publication de la demande:
**06.04.2011 Bulletin 2011/14**

(73) Titulaire: **Commissariat à l'Énergie Atomique et aux Énergies Alternatives
75015 Paris (FR)**

(72) Inventeur: **BOUTY, Olivier
F-26700 Pierrelatte (FR)**

(74) Mandataire: **Lucas, Laurent Jacques et al
Marks & Clerk France
Conseils en Propriété Industrielle
Immeuble Visium
22, Avenue Aristide Briand
94117 Arcueil Cedex (FR)**

(56) Documents cités:
- ITOH K ET AL: "Structure of amorphous TbNi2D2.4 observed by X-ray and neutron diffraction" JOURNAL OF ALLOYS AND COMPOUNDS, ELSEVIER SEQUOIA, LAUSANNE, CH, vol. 392, no. 1-2, 19 avril 2005 (2005-04-19), pages 6-11, XP004814610 ISSN: 0925-8388
- ITOH, KEIJI ET AL.: "Structure of amorphous CeFe2D3.9 observed by X-ray and neutron diffraction" JOURNAL OF ALLOYS AND COMPOUNDS, vol. 446-447, 2007, pages 19-22, XP002502271
- HENRY E FISCHER ET AL: "Neutron and x-ray diffraction studies of liquids and glasses" REPORTS ON PROGRESS IN PHYSICS, INSTITUTE OF PHYSICS PUBLISHING, BRISTOL, GB, vol. 69, no. 1, 1 janvier 2006 (2006-01-01), pages 233-299, XP020096276 ISSN: 0034-4885
- DELAYE J-M ET AL: "Investigation of multicomponent silicate glasses by coupling WAXS and molecular dynamics" JOURNAL OF NON-CRYSTALLINE SOLIDS, NORTH-HOLLAND PHYSICS PUBLISHING. AMSTERDAM, NL, vol. 293-295, 1 novembre 2001 (2001-11-01), pages 290-296, XP004320643 ISSN: 0022-3093

**Description**

La présente invention concerne un procédé d'obtention du facteur de structure d'un matériau amorphe. Ce matériau est par exemple du verre amorphe. L'invention s'applique notamment pour déterminer le facteur de structure de verres de protection d'éléments radioactifs afin d'étudier l'évolution de ce facteur sous l'effet de la radioactivité emmagasinée.

Le stockage d'éléments radioactifs doit répondre à des critères de sécurité et de fiabilité dans le temps très sévères. En particulier la protection vis-à-vis de l'environnement extérieur doit rester efficace sur plusieurs dizaines d'années, voire plusieurs siècles. Les déchets radioactifs sont classés selon plusieurs niveaux. Les matériaux radioactifs les plus sensibles, c'est-à-dire ceux qui présentent la plus haute radioactivité, sont stockés dans du verre amorphe qui est un matériau neutre sur le plan radioactif, faisant ainsi barrière à la propagation de la radioactivité. En pratique, les déchets radioactifs sont immergés dans du verre en fusion à haute température, à partir duquel des blocs de verres sont créés. La radioactivité est alors retenue prisonnière dans ces blocs de verres qui ont généralement la forme de tubes pour faciliter le stockage.

A l'échelle de quelques années, voire plusieurs dizaines d'années, on sait que la protection contre les fuites radioactives reste efficace. Cependant, au-delà de cette durée observée, il n'y a pas de certitude sur l'efficacité absolue du verre contre des fuites. En particulier, les atomes radioactifs retenus à l'intérieur du verre pourraient avoir un impact non négligeable au fil du temps, jusqu'à causer éventuellement des fuites de radioactivité.

Une caractérisation de la structure des verres amorphes est donc nécessaire pour anticiper d'éventuels problèmes à long terme. En particulier, il est nécessaire de caractériser l'influence des éléments radioactifs sur la structure du verre, pour savoir notamment si le rayonnement radioactif modifie cette structure, comment ou selon quelle loi, permettant ainsi de savoir si la protection tient sur le long terme ou si elle faiblit, dans quelle mesure et comment y remédier.

Par opposition aux matrices cristallines, les matrices amorphes sont dépourvues de toute structure périodique. La caractérisation de telles structures est donc un problème d'une grande complexité, où la modélisation joue un rôle important. Cette caractérisation repose ainsi plutôt sur l'obtention d'informations dans le domaine des faibles distances interatomiques. Expérimentalement, un ensemble de diagnostics peut être mis en oeuvre, parmi lesquels la résonance magnétique nucléaire (RMN) ou la diffusion par rayons X aux grands angles, ce dernier diagnostic étant généralement connu sous l'acronyme WAXS issu de l'expression anglo-saxonne « Wide Angle X ray Scattering ».

Afin d'étudier la structure désordonnée d'un verre amorphe, on peut utiliser l'approche statistique consistant à obtenir à partir de spectres enregistrés expérimentalement par la méthode WAXS des informations sur la distribution atomique qui est l'une des représentations les plus caractéristiques d'une structure amorphe.

Dans ce contexte, une grandeur importante est la diffusion élastique à l'intérieur du verre à partir d'un rayon X émis, cohérente, dépendante ou interférente, contenant une information sur les interférences constructives qui se produisent lorsque l'onde électromagnétique passe à proximité des atomes qui sont vus comme des centres diffusants. La diffraction des rayons X est un phénomène de diffusion cohérente et élastique qui se produit lorsque les rayons X interagissent avec la matière. L'onde diffractée résulte de l'interférence des ondes diffusées par chaque atome.

Un spectre expérimental qui est enregistré par la méthode WAXS l'est sur le domaine le plus large possible d'angles de diffusion. Dans ce cas, il est la résultante des phénomènes de diffusion élastique et inélastique dépendants, pour les faibles angles de diffusion, et quasi indépendants, pour les grands angles de diffusion. Il est donc nécessaire d'extraire uniquement la fraction de signal cohérent dépendant en corrigeant le spectre initial des différents phénomènes qui l'altèrent. Cela nécessite notamment la connaissance de la diffusion du faisceau incident par le gaz résiduel présent autour de l'échantillon étudié, de l'absorption par cet échantillon et des différentes polarisations qui interviennent lorsque le faisceau de rayons X se réfléchit à la surface de l'échantillon ou du cristal du monochromateur.

Ces diverses corrections sont liées aux spécificités des diffractomètres utilisés, en particulier au type du monochromateur, à la nature du gaz résiduel entourant le diffractomètre utilisé, au type de détecteur, à la présence de filtres sur le trajet des rayons X et à la diffusion du faisceau par réflexion ou par transmission. Les autres corrections appliquées au spectre expérimental qui ne peuvent être estimées expérimentalement comme la diffusion cohérente indépendante ou la diffusion incohérente indépendante, sont évaluées de manière théorique à l'aide de tables issues de calculs abinitio.

L'application des diverses corrections permet de construire le facteur de structure du verre, puis la fonction de distribution radiale. Elle permet essentiellement de quantifier les distances interatomiques, ainsi que les nombres de coordinence de la matrice étudiée.

L'ensemble des opérations décrites précédemment, ainsi que le calcul de la fonction de distribution radiale, doivent être effectués par étapes successives :

- d'une part, l'obtention d'un facteur de structure adéquat nécessite plusieurs itérations au cours desquelles des paramètres correctifs peuvent être ajustés ;
- d'autre part, le calcul de la fonction de distribution radiale par transformée de Fourier se heurte à l'effet de troncature du spectre dans le domaine des valeurs élevées du module du vecteur diffusion, introduisant des artefacts mathématiques difficiles à discerner par la suite.

Un but de l'invention est notamment de rassembler dans une procédure unique l'ensemble des calculs permettant d'obtenir la fonction de distribution radiale à partir d'un spectre expérimental obtenu notamment par la méthode WAXS.

A cet effet, l'invention a pour objet un procédé tel que décrit par les revendications.

D'autres caractéristiques et avantages de l'invention apparaîtront à l'aide de la description qui suit faite en regard de dessins annexés qui représentent :

- la figure 1, une illustration du principe de mesure d'un spectre de diffusion par rayons X utilisé par le procédé selon l'invention ;
- la figure 2, une illustration de la longueur de pénétration d'un rayon incident à l'intérieur d'un échantillon de matériau amorphe avant réflexion ;
- la figure 3, un exemple de spectre de diffusion obtenu à partir de mesures expérimentales d'intensités de photons réfléchis ;
- la figure 4, une autre représentation spectrale par une courbe représentant la variation d'une grandeur $Q.i$, produit du module du vecteur de diffusion et de l'intensité réduite, en fonction de $Q$ ;
- la figure 5, un exemple de distribution de fonction de distribution atomique radiale.

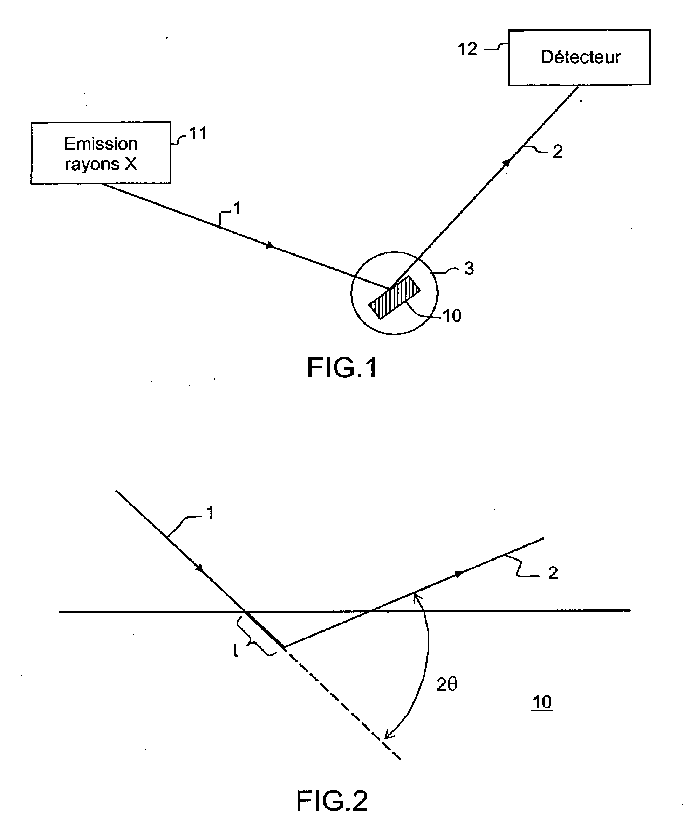

La figure 1 illustre le principe de diffusion par rayons X utilisé par le procédé selon l'invention. Un faisceau de photons X incident 1 émis par une source 11 en direction d'un échantillon de verre 10 est rétrodiffusé, ou réfléchi, par ce dernier.

L'échantillon de verre 10 est placé sur un diffractomètre 3. La présence ou non d'un monochromateur arrière peut être prise en compte dans la configuration du diffractomètre.

Le rayon X incident 1 est réfléchi par le verre. La figure 1 présente un rayon réfléchi 2 par l'échantillon 10. Un détecteur 12 est placé dans la direction de propagation du rayon réfléchi 2. Ce détecteur 12 permet notamment de mesurer l'intensité des photons réfléchis.

Dans une méthode du type WAXS, on fait varier l'angle d'incidence du rayon X émis 1 dans un domaine angulaire important, entraînant la variation de l'angle de diffusion $\theta$ dans un domaine angulaire important. L'intensité des photons réfléchis varient alors en fonction de cet angle de diffusion $\theta$.

L'intensité de diffusion ne change pas avec la direction, elle est isotropique, et ne dépend que du module du vecteur d'onde de diffusion $Q = \dfrac{4\pi \sin \theta}{\lambda}$, $\lambda$ étant la longueur de l'onde émise 1.

En pratique, le rayon incident 11 traverse une certaine épaisseur de verre avant de se diffuser dans le verre.

La figure 2 illustre ce phénomène de diffusion. Cette figure montre en effet que le rayon incident 1 parcourt une longueur $l$ avant de se diffuser, et notamment avant de générer un rayon réfléchi tel que le rayon 2 illustré dans la figure 1, faisant un angle $2\theta$ avec la direction du rayon incident. En effet, dans le cas d'une diffusion par réflexion, le faisceau de photons X traverse une certaine épaisseur de matière dans l'échantillon de verre 10 avant et après les phénomènes de diffusion.

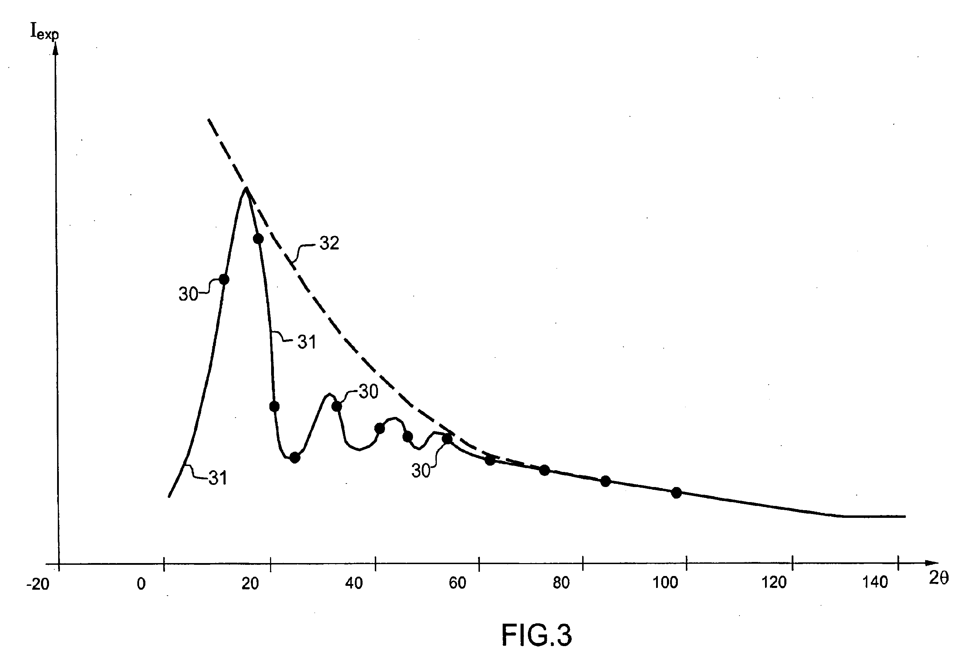

La figure 3 illustre par une première courbe 31 l'allure de l'intensité expérimentale $I_{exp}$, de photons réfléchis, mesurée par le détecteur 12 en fonction de l'angle de diffusion $2\theta$. Cette courbe 31 est obtenue à partir de points de mesures expérimentaux 30.

Comme indiqué précédemment, cette représentation du spectre expérimental 31 est la résultante des phénomènes de diffusion élastiques et inélastiques dépendant, pour les faibles angles de diffusion $\theta$, et quasi indépendants pour les grands angles de diffusion $\theta$. Il est donc nécessaire d'extraire uniquement la fraction de signal cohérent dépendant en corrigeant ce spectre expérimental des différents phénomènes qui l'altèrent. Le procédé selon l'invention permet d'obtenir le facteur de structure ou la fonction de distribution radiale de l'échantillon 10 à partir de ce spectre en un processus simplifié, s'affranchissant au maximum d'une intervention subjective d'un utilisateur dans l'établissement des différentes grandeurs calculées.

Une deuxième courbe 32 illustre un spectre simplifié obtenu par calcul analytique, correspondant au spectre corrigé. Pour faire coïncider les deux spectres, il faut donc corriger le spectre expérimental des phénomènes d'absorption, de polarisation et d'effet de gaz résiduels présent autour de l'échantillon de verre 10.

Une intensité $I_a$ de photons est absorbée dans le verre, cette quantité de photons absorbés est donnée par la relation suivante :

$$I_a = I_{incident}\left[1 - \exp\left(-\frac{\mu\rho 2l}{\sin\theta}\right)\right] \qquad (1)$$

où $I_{incident}$ est l'intensité de photons du faisceau incident, $l$ est la longueur précitée de pénétration dans l'échantillon avant la première diffusion, $2\theta$ est l'angle de diffusion entre le rayon incident 1 et le rayon réfléchi 2, $\mu$ est le coefficient d'absorption massique et $\rho$ la masse volumique.

Le faisceau issu de la source 11 est en général non polarisé. Par contre, dès qu'il est diffusé par l'échantillon de verre 10, une partie du rayonnement est polarisée suivant un angle $2\theta$. La présence du cristal d'un monochromateur dans le diffractomètre entraîne la répétition de ce phénomène avec un angle $2\theta_m$, l'intensité totale normalisée $I_N$ du faisceau réfléchi s'écrit selon la relation suivante :

$$I_N = I_0 \frac{1 + \cos^2 2\theta \cos^2 2\theta_m}{1 + \cos^2 2\theta_m} \qquad (2)$$

où $I_N/I_0$ est le facteur de polarisation P, $I_0$ correspondant à l'intensité du faisceau incident.

L'intensité expérimentale, mesurée par le détecteur 12, corrigée des phénomènes d'absorption et de polarisation précédemment décrits, ainsi que des effets du gaz résiduel peut s'écrire comme la somme d'une contribution interférente dépendante, d'une contribution cohérente indépendante et d'une contribution incohérente indépendante, soit :

$$I_{mesurée\ corrigée} = I_{ci} + I_{cd} + I_{ii} \qquad (3)$$

où $I_{ci}$, $I_{cd}$, $I_{ii}$ représentent respectivement l'intensité cohérente indépendante, l'intensité cohérente interférente dépendante, et l'intensité incohérente indépendante, soit finalement :

$$I_{mesurée\ corrigée} = I_{ci}\left(1 + \frac{I_{cd}}{I_{ci}}\right) + I_{ii} \qquad (3)'$$

La correction liée à la présence d'un gaz résiduel peut se réaliser de façon simple par soustraction du spectre lié à ce gaz.

Les coefficients de diffusion atomique nécessaires à l'estimation de l'intensité cohérente $I_{ci}$ indépendante peuvent être sélectionnés automatiquement à partir d'une table connue, la table de Cromer-Mann, ou à partir d'une autre table connue, la table de Klug. En cas d'utilisation de la table de Cromer-Mann, deux possibilités existent :

- les coefficients peuvent être tirés de la référence originale de Cromer-Mann, mais dans ce cas une condition s'applique, cette condition étant que la quantité Q soit inférieure à 18,9 ;
- les coefficients sont issus d'un calcul numérique « Lazy-Pulverix » de J.Quintana, avec dans ce cas comme condition que Q soit inférieure à 25. Dans tous les cas, les coefficients $a_i, b_i$, et $c$ de la diffusion atomique $f_0$ en fonction de l'angle $\theta$ vérifient la relation suivante :

$$f_0\left(\frac{\sin\theta}{\lambda}\right) = c + \sum_{i=1}^{4} a_i \exp\left[-b_i\left(\frac{\sin\theta}{\lambda}\right)^2\right] \qquad (4)$$

En ce qui concerne les intensités incohérentes indépendantes $I_{ii}$, elles peuvent être sélectionnées automatiquement à partir d'une table connue, la table de Balyusi ou tabulées manuellement à partir de données de Smith, Thakkar et Chapman (voir V.H. Smith Jr, A.Thakkar & D.C.Chapman, Acta Cryst. A31, 1975). L'expression de Smith, Thakkar et Chapman présente un comportement asymptotique correct pour les faibles et grandes valeurs de Q, ce qui s'exprime selon la relation suivante :

$$\frac{I_{ii}}{I_e} = N\left[1 - \frac{1 + aS^2 + bS^4}{1 + cS^2 + dS^4}\right] \qquad (5)$$

où $S = \dfrac{\sin\theta}{\lambda}$, et $I_{ii}, I_e$ représentent respectivement l'intensité incohérente indépendante inélastique et l'intensité élastique, N étant le nombre d'électrons pour un atome neutre.

L'invention utilise une autre quantité en combinaison avec la grandeur Q, cette quantité est l'intensité réduite $i$ définie comme le rapport de l'intensité cohérente interférente à l'intensité cohérente indépendante $\dfrac{I_{cd}}{I_{ci}}$, cette intensité réduite peut être donnée par la relation suivante, issue de la relation (3)' précédente :

$$i = \frac{I_{mesurée\ corrigée} - (I_{ii} + I_{ci})}{I_{ci}} \qquad (6)$$

L'intensité réduite $i$ peut donc être obtenue à partir de l'intensité $I_{mesurée\ corrigée}$ elle-même obtenue à partir de l'intensité expérimentale $I_{exp}$ corrigée des effets d'absorption, de polarisation et de gaz résiduel notamment, et des intensités $I_{ii}$, incohérente indépendante, et $I_{ci}$, cohérente indépendante, obtenues par exemple au moyen de tables. Ces intensités sont fonction de de $Q = \dfrac{4\pi \sin\theta}{\lambda}$, il s'ensuit que l'intensité réduite $i$ est elle-même fonction de Q.

Si on appelle $S_f$ le facteur de structure statique, l'intensité réduite $i$ peut s'identifier à celui-ci suivant la relation $i(Q) = S_f(Q)-1$. $S_f$ est une grandeur obtenue à partir de la mesure expérimentale de diffraction X sur le verre étudié, et qui contient une information sur sa structure.

L'intensité obtenue après application des corrections précédentes doit être exprimée en unités électroniques eV (électrons-volts) pour permettre d'accéder aux fonctions de distribution radiales. Une technique communément utilisée consiste à faire coïncider la partie du spectre expérimental 31 pour les grandes valeurs du module du vecteur d'onde de diffusion Q avec l'intensité décrivant les phénomènes de diffusion des centres diffuseurs $M_j$ considérés comme indépendants les uns des autres. Les expressions des deux contributions indépendantes, élastique et inélastique (ou Compton), sont respectivement données par les relations suivantes :

$$I_{ind\ élastique} = \sum_{M_j} c_{M_j} f_{M_j}^{\ 2} \qquad (7)$$

$$I_{ind\ inélastique} = \sum_{M_j} c_{M_j} I_j \qquad (8)$$

Les coefficients $f_{M_j}$ représentent les coefficients de diffusion atomiques, les coefficients $I_j$ représentent les intensités élémentaires et les coefficients $c_{M_j}$ représentent les fractions élémentaires atomiques.

Une constante de normalisation $\alpha$ rapporte l'intensité expérimentale $I_{exp}$ en une grandeur électronique $I_{électronique}$ exprimée en eV (électron-volts), soit $I_{exp} = \alpha.I_{électronique}$.

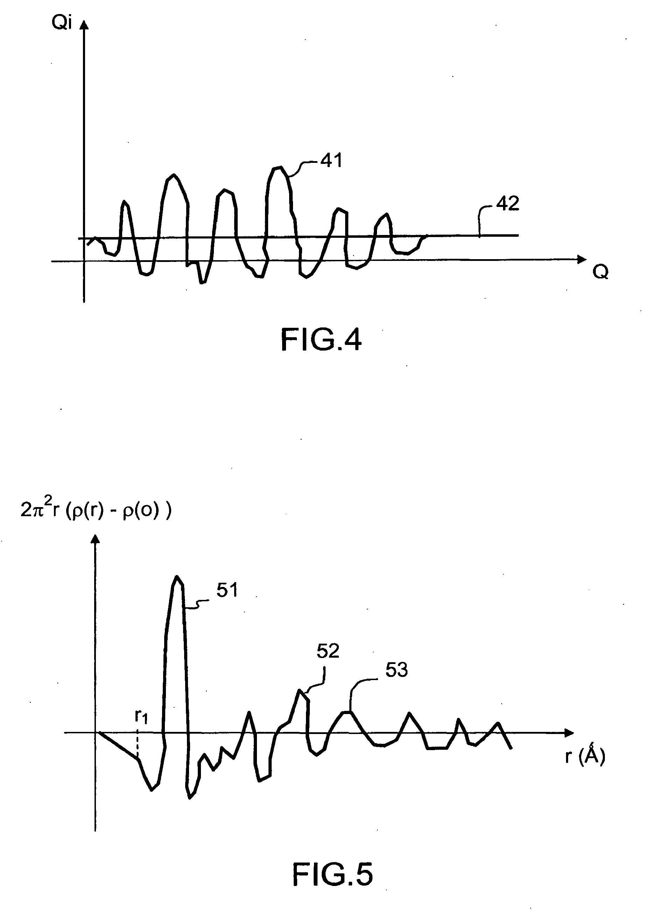

Cette constante de normalisation est basée sur la méthode de Krogh-Moe, voir J.Krogh-Moe, Acta Cryst. 9, 951 (1956) et N.Norman, Acta Cryst. 10, 370 (1957). Elle est obtenue en intégrant le spectre 31 sur tout le domaine en Q disponible expérimentalement, par exemple entre 0 et 17 Å$^{-1}$ dans le cas de la figure 4 :

$$\alpha = \frac{\int\limits_{0}^{\infty} Q^2 I_{exp} dQ - 2\pi^2 \rho_0 \left( \sum\limits_{j} Zj \right)^2}{\int\limits_{0}^{\infty} Q^2 (I_{ind\ élastique} + I_{ind\ inélastique}) dQ} \qquad (9)$$

La densité atomique moyenne $\rho_0$ correspond à l'inverse du volume des atomes présents dans une unité de composition. Elle vérifie la relation suivante :

$$\rho_0 = \frac{Nd}{A.10^{24}} \qquad (10)$$

où N est le nombre d'Avogadro, d la masse volumique de la matrice d'atomes et A la masse atomique, Zj correspondant au numéro atomique d'un atome j.

La figure 4 illustre par une courbe 41 une autre représentation spectrale. Cette courbe 41 représente la variation de la grandeur Q.i en fonction de Q, i étant elle-même fonction de Q.

La courbe Q.i (Q) 41, peut être obtenue à partir de mesures expérimentales, issues par exemple de l'exemple de la figure 3, l'intensité réduite i étant déterminée par les corrections précédemment décrites. La grandeur Q.i est par exemple calculée pour un domaine de Q variant entre 0 et 17 Å$^{-1}$.

La courbe 41 est donc déterminable à partir de mesures expérimentales, corrigées et normalisées.

Les grandeurs correctives appliquées pour obtenir l'intensité réduite sont déterminées par calcul ou au moyen de tables, dans tous les cas au moyen de paramètres connus sauf en ce qui concerne l'absorption qui dépend de la longueur de pénétration l du rayon dans l'échantillon avant la diffusion. L'intensité réduite i n'est donc pas connue tant que cette longueur l n'est pas déterminée. Il faut donc résoudre l pour obtenir les valeurs de i et par conséquent les valeurs de Q.i (Q).

L'invention utilise avantageusement une caractéristique de la courbe 41, à savoir qu'une régression linéaire sur ses valeurs est une droite 42 à pente nulle dès que Q est assez grand, par exemple dès que Q > 10 Å$^{-1}$. Selon l'invention, on résout la longueur de pénétration l pour cette pente p(Q.i)=0. A cet effet, on fait donc varier la constante de normalisation $\alpha$ de manière récursive afin de minimiser la pente de la droite affine obtenue par régression linéaire sur les valeurs de l'intensité réduite i(Q) multipliée par le module du vecteur diffusion Q. Lors de chaque itération, les valeurs de l'intensité réduite sont calculées en fonction de Q pour une longueur l. Les valeurs d'intensité réduite retenues pour cette régression linéaire correspondent aux mesures successives d'intensité expérimentale fonction chacune d'un angle de diffusion 2θ, donc d'une valeur de Q donnée.

Lorsque la pente p(Q.i) est minimisée, p(Q.i ) = 0 par exemple, la valeur l obtenue est la valeur recherchée et les valeurs Q.i(Q) déterminées correspondent aux valeurs recherchées. Une fonction Q.i(Q), discrétisée, est ainsi obtenue. Elle peut être extrapolée en une fonction continue.

La figure 5 illustre par une courbe 51 un exemple de distribution radiale, à partir de laquelle peut être déduit de façon connue le facteur de forme d'une structure amorphe, notamment le facteur de forme de l'échantillon de verre 10.

La fonction Q.i(Q) obtenue selon l'invention permet d'accéder à la fonction de distribution radiale $\rho(r)$ définie par la relation suivante :

$$r[\rho(r) - \rho(0)] = \frac{1}{2\pi^2} \int\limits_{0}^{\infty} Qi(Q) \sin Qr \, dQ \qquad (11)$$

Le rayon r est la distance à partir d'un atome donné, centre de diffusion. $\rho(r)$ est la concentration atomique dans une coquille sphérique de rayon r et d'épaisseur dr. La relation (11) donne la distribution radiale de cette concentration.

La transformée de Fourier inverse permet d'accéder de façon connue au à la fonction de distribution radiale. La transformée de Fourier inverse n'est par exemple calculée qu'en des points prédéterminés qui permettent de minimiser les fluctuations liés à la troncature du spectre, au-delà de la valeur maximum de $Q$, par exemple $Q_{max}$ =17 $\text{Å}^{-1}$, conformément à la méthode de R. Lovell et al décrite dans R. Lovell, G.R. Mitchell & A.H. Windle, Acta Cryst. A35, 598-603 (1979) . La meilleure précision est obtenue pour une valeur maximale de Q correspondant à un extrémum de $Q.i$ . Le dernier extrémum est par exemple détecté automatiquement à partir de la position du dernier zéro de la fonction $Q.i$. De la position de cet extrémum va dépendre la finesse de séparation de pics très proches 52, 53 dans la fonction de distribution radiale. L'intégrale de Fourier est alors calculée à partir d'une fonction continue dont l'expression correspond au développement en série de Fourier de $Q.i$.

Cette méthode ne permet pas d'éliminer totalement les fluctuations parasites pour les très courtes distances interatomiques. On impose alors un critère qui rend la fonction de distribution linéaire en dessous d'une valeur de seuil $r_1$ que l'on peut déterminer arbitrairement ou expérimentalement.

## Revendications

1.  Procédé d'obtention du facteur de structure d'un matériau amorphe à partir d'un spectre de diffusion de rayons X à l'intérieur d'un échantillon (10) dudit matériau enregistré expérimentalement, au moins un rayon X étant émis en un rayon incident (1) vers ledit échantillon et réfléchi (2) vers un détecteur (12), le rayon X incident (1) balayant la surface de l'échantillon selon un angle d'incidence donné , **caractérisé en ce qu'**il comporte :

    - une étape d'enregistrement de mesures d'intensité photonique expérimentale effectuées par le détecteur (12) en fonction de l'angle d'incidence ;
    - une étape de correction de l'intensité expérimentale, prenant en compte au moins les phénomènes d'absorption à l'intérieur de l'échantillon, la quantité d'intensité absorbée à chaque mesure étant fonction de la longueur de pénétration $l$ de l'onde incidente à l'intérieur de l'échantillon avant réflexion ;
    - une étape de normalisation rapportant l'intensité corrigée issue de l'intensité expérimentale à une intensité électronique selon un coefficient de normalisation ($\alpha$) ;

    - une étape de calcul d'une fonction discrétisée $Q.i(Q)$, $i$ étant une intensité réduite, qui est le rapport $\left( \dfrac{I_{cd}}{I_{ci}} \right)$ de l'intensité cohérente dépendante sur l'intensité cohérente indépendante réfléchies, issue des mesures de l'intensité expérimentale corrigée et normalisée et $Q$ étant le module du vecteur de diffusion d'onde proportionnel

    à la grandeur $\dfrac{\sin\theta}{\lambda}$ , $2\theta$ étant l'angle de diffusion et $\lambda$ étant la longueur de l'onde émise, la constante de

    normalisation ($\alpha$) variant de manière récursive pour minimiser la pente de la droite affine (42) obtenue par régression linéaire sur les valeurs de la fonction $Q.i\,(Q)$, lors de chaque itération les valeurs de l'intensité réduite étant calculées pour une longueur de pénétration $l$, la fonction $Q.i(Q)$ recherchée (41) correspondant à la pente minimale ;
    - une étape de détermination du facteur de structure à partir de la distribution de la concentration atomique radiale $\rho(r)$ fonction de $Q.i(Q)$.

2.  Procédé selon la revendication 1, **caractérisé en ce que** la fonction $Q.i(Q)$ recherchée correspond à la pente nulle.

3.  Procédé selon l'une quelconque des revendications précédentes, **caractérisé en ce que** l'intensité réduite est obtenue à partir de l'intensité expérimentale corrigée des phénomènes d'absorption, de polarisation et de gaz résiduel $I_{mesurée\ corrigée}$ et des intensités incohérente indépendante $I_{ii}$ et cohérente indépendante $I_{ci}$ :

$$i = \frac{I_{mesurée\ corrigée} - (I_{ii} + I_{ci})}{I_{ci}}$$

4.  Procédé selon l'une quelconque des revendications précédentes, **caractérisé en ce que** le coefficient de normalisation $\alpha$ est donné par la relation suivante :

$$\alpha = \frac{\int\limits_0^\infty Q^2 I_{\exp} dQ \ - 2\pi^2 \rho_0 \left( \sum_j Zj \right)^2}{\int\limits_0^\infty Q^2 (I_{ind\ élastique} + I_{ind\ inélastique}) dQ} .$$

$\rho_0$ étant la densité atomique moyenne correspond à l'inverse du volume des atomes présents dans une unité de composition de l'échantillon, $I_{\exp}$ étant l'intensité expérimentale, $I_{ind\ élastique}$ et $I_{ind\ inélastique}$ étant l'intensité réfléchie indépendante élastique et indépendante inélastique et $Zj$ correspondant au numéro atomique d'un atome $j$.

5. Procédé selon l'une quelconque des revendications précédentes, **caractérisé en ce que** la fonction $Q.i(Q)$ obtenue est liée à la fonction de distribution de concentration atomique radiale $\rho(r)$ par la relation suivante :

$$r[\rho(r) - \rho(0)] = \frac{1}{2\pi^2} \int\limits_0^\infty Qi(Q) \sin Qr \ dQ$$

le rayon $r$ étant la distance à partir d'un atome donné, centre de diffusion, $\rho(r)$ étant la concentration atomique dans une coquille sphérique de rayon $r$ et d'épaisseur $dr$.

6. Procédé selon l'une quelconque des revendications précédentes, **caractérisé en ce que** la méthode de diffusion X est la méthode de diffusion dite aux grands angles (WAXS).

7. Procédé selon l'une quelconque des revendications précédentes, **caractérisé en ce que** le matériau est du verre amorphe.

8. Procédé selon la revendication 7, **caractérisé en ce que** le verre est susceptible d'envelopper des éléments radioactifs.

**Patentansprüche**

1. Verfahren zum Bestimmen des Strukturfaktors eines amorphen Materials anhand eines Diffusionsspektrums von Röntgenstrahlen im Innern einer Probe (10) des experimentell aufgezeichneten Materials, wobei wenigstens ein Röntgenstrahl in einem Einfallsstrahl (1) zu der Probe emittiert und zu einem Detektor (12) reflektiert (2) wird, wobei der Einfallsröntgenstrahl (1) die Oberfläche der Probe mit einem gegebenen Einfallswinkel abtastet, **dadurch gekennzeichnet, dass** es Folgendes beinhaltet:

- einen Schritt des Aufzeichnens von experimentellen photonischen Intensitätsmessungen, durchgeführt von dem Detektor (12) in Abhängigkeit vom Einfallswinkel;
- einen Schritt des Korrigierens der experimentellen Intensität unter Berücksichtigung wenigstens der Absorptionsphänomene im Innern der Probe, wobei die bei jeder Messung absorbierte Intensität von der Penetrationslänge *l* der im Innern der Probe einfallenden Welle vor der Reflexion abhängig ist;
- einen Schritt des Normalisierens, bei dem die korrigierte Intensität von der experimentellen Intensität auf eine elektronische Intensität gemäß einem Normalisierungskoeffizienten ($\alpha$) bezogen wird;
- einen Schritt des Berechnens einer diskretisierten Funktion $Q.i(Q)$, wobei $i$ eine reduzierte Intensität ist, die das Verhältnis $\left(\frac{I_{cd}}{I_{ci}}\right)$ zwischen der kohärenten abhängigen Intensität und der reflektierten kohärenten unabhängigen Intensität ist, nach Messungen der experimentellen korrigierten und normalisierten Intensität, und wobei $Q$ das Modul des Wellendiffusionsvektors proportional zur Größe $\frac{sin\theta}{\lambda}$ ist, wobei $2\theta$ der Diffusionswinkel und $\lambda$ die Länge der emittierten Welle ist, wobei die Normalisierungskonstante ($\alpha$) auf rekursive Weise variiert, um die Steigung der affinen Geraden (42) zu minimieren, erhalten durch lineare Regression auf den Werten der Funktion $Q.i(Q)$, wobei bei jeder Iteration die Werte der reduzierten Intensität für eine Penetrationslänge *l* berechnet werden, wobei die gesuchte (41) Funktion $Q.i(Q)$ der minimalen Steigung entspricht;
- einen Schritt des Ermittelns des Strukturfaktors anhand der Verteilung der radialen Atomkonzentration $\rho$(r) in Abhängigkeit von $Q.i(Q)$.

2. Verfahren nach Anspruch 1, **dadurch gekennzeichnet, dass** die gesuchte Funktion $Q.i(Q)$ einer Steigung von null entspricht.

3. Verfahren nach einem der vorherigen Ansprüche, **dadurch gekennzeichnet, dass** die reduzierte Intensität auf der Basis der korrigierten experimentellen Intensität von Phänomenen von Absorption, Polarisation und Restgas $I_{gemessen\ korrigiert}$ und von unabhängiger inkohärenter Intensität $I_{ii}$ und unabhängiger kohärenter Intensität $I_{ci}$ erhalten wird:

$$i = \frac{I_{gemessen\ korrigiert} - (I_{ii} + I_{ci})}{I_{ci}}$$

4. Verfahren nach einem der vorherigen Ansprüche, **dadurch gekennzeichnet, dass** der Normalisierungskoeffizient $\alpha$ durch die folgende Relation angegeben wird:

$$\alpha = \frac{\int_0^\infty Q^2 I_{exp} dQ - 2\pi^2 \rho_0 \left(\sum_j Zj\right)^2}{\int_0^\infty Q^2 (I_{unabh\ elastisch} + I_{unabh\ unelastisch}) dQ}$$

wobei $\rho_0$ die mittlere atomare Dichte ist, die der Umkehr des Volumens der Atome entspricht, die in einer Zusammensetzungseinheit der Probe vorhanden sind, wobei $I_{exp}$ die experimentelle Intensität ist, wobei $I_{unabh\ elastisch}$ und $I_{unabh\ unelastisch}$ die unabhängige elastische und unabhängige unelastische reflektierte Intensität sind und $Z_j$ der Atomzahl eines Atoms $j$ entspricht.

5. Verfahren nach einem der vorherigen Ansprüche, **dadurch gekennzeichnet, dass** die erhaltene Funktion $Q.i(Q)$ mit der Funktion der radialen atomaren Kontentrationsverteilung $\rho$(r) durch die folgende Relation verbunden ist:

$$r[\rho(r) - \rho(0)] = \frac{1}{2\pi^2} \int_0^\infty Qi(Q) \sin Qr\ dQ$$

wobei der Strahl r die Distanz auf der Basis eines gegebenen Atoms ist, Diffusionsmitte, wobei $\rho$(r) die atomare Konzentration in einer kugelförmigen Schale mit Radius r und Dicke $dr$ ist.

6. Verfahren nach einem der vorherigen Ansprüche, **dadurch gekennzeichnet, dass** das Diffusionsverfahren X das sogenannte Diffusionsverfahren mit großen Winkeln (WAXS) ist.

7. Verfahren nach einem der vorherigen Ansprüche, **dadurch gekennzeichnet, dass** das Material amorphes Glas ist.

8. Verfahren nach Anspruch 7, **dadurch gekennzeichnet, dass** das Glas radioaktive Elemente einschließen kann.

**Claims**

1. A method for obtaining the structure factor of an amorphous material on the basis of a spectrum of X-ray scattering inside a specimen (10) of said material recorded experimentally, at least one X-ray being emitted as an incident ray (1) toward said specimen and reflected (2) toward a detector (12), the incident X-ray (1) scanning the surface of the specimen according to a given angle of incidence, **characterized in that** it comprises:

- a step of recording experimental photon intensity measurements performed by the detector (12) as a function of the angle of incidence;

- a step of correcting the experimental intensity, taking into account at least the absorption phenomena inside the specimen, the amount of intensity absorbed at each measurement being dependent on the penetration length I of the incident wave inside the specimen before reflection;

- a normalization step referring the corrected intensity arising from the experimental intensity to an electron intensity according to a normalization coefficient ($\alpha$);

- a step of calculating a discretized function $Q.i(Q)$, $i$ being a reduced intensity, which is the ratio $\left(\dfrac{I_{cd}}{I_{ci}}\right)$ of the reflected dependent coherent intensity over the reflected independent coherent intensity, arising from the measurements of the corrected and normalized experimental intensity and $Q$ being the modulus of the wave scattering vector proportional to the quantity $\dfrac{\sin\theta}{\lambda}$, $2\theta$ being the scattering angle and $\lambda$ being the length of the wave emitted, the normalization constant ($\alpha$) varying in a recursive manner so as to minimize the slope of the affine straight line (42) obtained by linear regression over the values of the function $Q.i(Q)$, during each iteration the values of the reduced intensity being calculated for a penetration length $I$, the function $Q.i(Q)$ sought (41) corresponding to the minimum slope;

- a step of determining the structure factor on the basis of the distribution of the radial atomic concentration $\rho(r)$ dependent on $Q.i(Q)$.

2. The method as claimed in claim 1, **characterized in that** the function $Q.i\ (Q)$ sought corresponds to the zero slope.

3. The method as claimed in any one of the preceding claims, **characterized in that** the reduced intensity is obtained on the basis of the experimental intensity corrected for the phenomena of absorption, polarization and residual gas $I_{measured\ corrected}$ and the independent incoherent intensity $I_{ii}$ and independent coherent intensity $I_{ci}$ :

$$i = \frac{I_{measured\ corrected} - (I_{ii} + I_{ci})}{I_{ci}}$$

4. The method as claimed in any one of the preceding claims, **characterized in that** the normalization coefficient $\alpha$ is given by the following relation:

$$\alpha = \frac{\displaystyle\int_0^\infty Q^2 I_{exp}\,dQ \;-\; 2\pi^2\rho_0\left(\sum_j Zj\right)^2}{\displaystyle\int_0^\infty Q^2(I_{elastic\ ind} + I_{inelastic\ ind})\,dQ}$$

$\rho_0$ being the mean atomic density corresponding to the inverse of the volume of the atoms present in a unit of composition of the specimen, $I_{exp}$ being the experimental intensity, $I_{elastic\ ind}$ and $I_{inelastic\ ind}$ being the elastic independent and inelastic independent reflected intensity and corresponding to the atomic number of an atom $j$.

5. The method as claimed in any one of the preceding claims, **characterized in that** the function $Q.i\ (Q)$ obtained is related to the radial atomic concentration distribution function $\rho(r)$ by the following relation:

$$r\big[\rho(r) - \rho(0)\big] = \frac{1}{2\pi^2}\int_à^\infty Qi(Q)\sin Qr\,dQ$$

the radius r being the distance from a given atom, the scattering center, $\rho(r)$ being the atomic concentration in a spherical shell of radius $r$ and of thickness $dr$.

6. The method as claimed in any one of the preceding claims, **characterized in that** the X scattering method is the so-called large angle scattering method (WAXS).

7. The method as claimed in any one of the preceding claims, **characterized in that** the material is amorphous glass.

8. The method as claimed in claim 7, **characterized in that** the glass may envelop radioactive elements.

12 — Détecteur

11

Emission
rayons X

1

2

3

10

## FIG.1

1

2

2θ

l

10

## FIG.2

FIG.3

EP 2 304 413 B1

FIG.4

FIG.5

**EP 2 304 413 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **V.H. SMITH JR ; A.THAKKAR ; D.C.CHAPMAN.** *Acta Cryst.,* 1975, A31
- **J.KROGH-MOE.** *Acta Cryst.,* 1956, vol. 9, 951
- **N.NORMAN.** *Acta Cryst.,* 1957, vol. 10, 370
- **R. LOVELL ; G.R. MITCHELL ; A.H. WINDLE.** *Acta Cryst.,* 1979, vol. A35, 598-603